# EUROPÄISCHE PATENTSCHRIFT

(11) **EP 4 139 090 B1**
(45) Veröffentlichungstag und Bekanntmachung des Hinweises auf die Patenterteilung: **12.06.2024**
(21) Anmeldenummer: 21723142.2
(22) Anmeldetag: 20.04.2021
(51) Int. Cl.: B25B 23/08, B23P 19/00, B25B 31/00

(54) **VORRICHTUNG ZUM SETZEN EINES VERBINDUNGSELEMENTS**
DEVICE FOR SETTING A CONNECTING ELEMENT
DISPOSITIF DE MISE EN PLACE D'UN ÉLÉMENT DE LIAISON

(30) Priorität: 21.04.2020 DE 102020110855
(43) Veröffentlichungstag der Anmeldung: 01.03.2023
(73) Patentinhaber: EJOT GmbH & Co. KG, 57319 Bad Berleburg (DE)
(72) Erfinder: DUBIEL, Gerhard, 99897 Tambach-Dietharz (DE); WERKMEISTER, Marco, 99894 Georgenthal (OT Schoenau v.d.W. (DE); BRANDAU-WOLFF, Angelique, 99897 Tambach-Dietharz (DE); KOEPPCHEN, Tim, 99885 Ohrdruf (DE)
(74) Vertreter: Puschmann Borchert Kaiser Klettner Patentanwälte Partnerschaft mbB
(86) Internationale Anmeldenummer: PCT/EP2021/060275
(87) Internationale Veröffentlichungsnummer: WO 2021/214083

(56) Entgegenhaltungen:
- EP-A1- 3 437 802
- DE-A1-102018 103 991
- US-A- 2 570 164

## Beschreibung

Die Erfindung betrifft eine Vorrichtung zum Setzen eines Verbindungselements gemäß Anspruch 1.

Automaten, bei welchen durch den Einsatz von Vakuum eine Schraube und Antriebswerkezuge zusammengebracht werden, sind aus der EP 3 437 802 A1 und der US 2 570 164 A bekannt.

In bekannter Weise umfasst eine Vorrichtung zum Setzen eines Verbindungselements mit einer kopfseitigen Antriebsstruktur eine Vorschubeinrichtung zur Aufbringung einer Axialkraft. Über die Vorschubeinrichtung wird eine Drehspindel und ein mit dieser verbundener Antriebsbit mit einer Anpresskraft in Setzrichtung bewegt. Insbesondere wird in der erfindungsgemäßen Vorrichtung eine Kraft von mehr als 1,5 kN auf die Drehspindel und damit auf das Verbindungselement ausgeübt.

Der Antriebsbit weist in Setzrichtung stirnseitig umlaufend angeordnete Antriebsstrukturen auf, um das Verbindungselement formschlüssig in Drehung zu versetzen. Ferner weist der Antriebsbit eine axiale Durchführung auf, wobei das Verbindungselement durch die Durchführung ansaugbar ist.

So offenbart die EP 2 632 629 B1, dass Verbindungselemente mittels Unterdruck an der Drehspindel temporär gehalten werden können.

Bei Verbindungselementen, die kleine Antriebsstrukturen aufweisen und die beschichtet sind, kann die Beschichtung dazu führen, dass sich Beschichtungsmittel an den Antriebsstrukturen ablagert, wodurch sich Unebenheiten ergeben, so dass der Antrieb des Verbindungselements und die Antriebsstrukturen des Antriebsbits nicht mehr zuverlässig ineinandergreifen. Dies führt bei der Halterung des Verbindungselements durch Unterdruck dazu, dass ein ausreichender Unterdruck nicht zuverlässig erreicht wird. Deshalb können Teile, die nicht in der nötigen hohen Qualität hergestellt sind, nicht verarbeitet werden und müssen aussortiert werden oder führen zu einem Fehler bei der Verarbeitung.

Die DE 10 2018 103 991 A1 schlägt vor, die Lage des Antriebselements in der Setzeinrichtung zu erkennen. Dieses Dokument zeigt den Oberbegriff von Anspruch 1.

Es ist Aufgabe der Erfindung eine Vorrichtung zum Setzen eines Verbindungselements anzugeben, welche eine zuverlässige Halterung an dem Antriebsbit der Vorrichtung ermöglicht, die höhere Toleranzen bzw. Oberflächenungleichmäßigkeiten bei der Verarbeitung von beschichteten Verbindungselementen erlaubt und damit eine höhere Verfügbarkeit in der Anlagentechnik bereitstellt. Erfindungsgemäß umfasst die Vorrichtung ein Einsatzelement, das stirnseitig eine Saugfläche aufweist, die an dem Kopf des Verbindungselements in Anlage kommt und einen Saugquerschnitt umlaufend begrenzt, wobei das Einsatzelement derart gestaltet ist, dass die Saugfläche in Axialrichtung relativ beweglich zum Antriebsbit ist.

Ferner ist das Einsatzelement derart gestaltet, dass ein Unterdruck von der in Setzrichtung abgewandten Seite des Einsatzelements zur Saugfläche des Einsatzelements übertragen werden kann, wobei die Saugfläche vor dem Ansaugen eines Verbindungselements eine erste Endlage einnimmt, die in Setzrichtung vom stirnseitigen Randbereich der Durchführung, der benachbart zur Saugfläche liegt, einen Abstand aufweist.

Auf diese Weise kann das Verbindungselement an das Einsatzelement und damit an den Antriebsbit zuverlässig angesaugt werden, auch wenn das Verbindungselement Unebenheiten in der Beschichtung, insbesondere in den Antriebsstrukturen, aufweist.

Dies gewährleistet eine zuverlässige Halterung des Verbindungselements, weil so die Saugfläche nur mit einem unstrukturierten Bereich des Verbindungselements, der neben den Antriebsstrukturen des Verbindungselements liegt, in Anlage kommen kann. Die unstrukturierten Bereiche des Verbindungselements weisen regelmäßig nur geringfügige bis keine durch die Beschichtung verursachten Unebenheiten auf.

Anschließend kann die Saugfläche relativ zum Antriebsbit axial bewegt werden, so dass die Antriebsstrukturen in das Verbindungselement vollständig eingreifen. Dies geschieht insbesondere bei Aufsetzen des Verbindungselements auf das Bauteil, bevorzugt, indem eine Anpresskraft auf die Saugfläche in Axialrichtung entgegen der Setzrichtung ausgeübt wird.

So wird das Verbindungselement bis nach dem Aufsetzen des Verbindungselements auf einer oberen Bauteillage zuverlässig an dem Einsatzelement gehalten, wonach das Verbindungselement unter Rotation und Axialkraft in das Bauteil eingebracht werden kann.

Der Saugdruck, mit dem das Verbindungselement an dem Einsatzelement und damit an dem Antriebsbit angesaugt wird, liegt insbesondere bei wenigstens 0,3 bar. Dies führt bevorzugt zu einem Unterdruck von -0,3 bar bis -0,85 bar.

Bevorzugt kann der Antriebsbit eine, insbesondere plane Fläche, zur Übertragung der Axialkraft zur Durchführung des Reibelementschweißvorgangs auf das Verbindungselement aufweisen. Alternativ kann die Axialkraft auch über das Einsatzelement aufgebracht werden.

Gemäß einer weiteren Ausgestaltung der Erfindung kann die Antriebsstruktur ein Antrieb für einen Außenantrieb sein, wobei die Saugfläche dann radial innerhalb der Antriebsstrukturen liegt.

Alternativ kann die stirnseitige Antriebsstruktur des Antriebsbits eine Antriebsstruktur für einen Innenantrieb sein, wobei dann die Saugfläche neben oder außerhalb der Antriebsstruktur liegt.

Bevorzugt kann das Einsatzelement eine Hülse umfassen, die in Axialrichtung relativ beweglich zum Antriebsbit gehalten ist. Die Hülse weist dabei eine erste Anlagefläche auf, wobei der Antriebsbit eine zweite Anlagefläche aufweist. Die zweite Anlagefläche ist derart zur ersten Anlagefläche korrespondierend ausgebildet, dass bei einer vordefinierten Endlage der Saugfläche gegenüber dem Antriebsbit, insbesondere einem leichten Überstand in Setzrichtung, die Anlageflächen derart dichtend zusammenwirken, dass ein Unterdruck durch die Hülse übertragbar ist.

Dies kann bevorzugt dadurch umgesetzt sein, dass die Anlagefläche an der Hülse als Bund und die Anlagefläche am Antriebsbit als Schulter ausgeführt ist, wobei sich Bund und Schulter quer zur Setzrichtung erstrecken. So kann einerseits eine dichtende Anordnung geschaffen werden, indem die Anlageflächen von Bund und Schulter aufeinander liegen, andererseits kann so ein Anschlag zwischen Bund und Schulter bereitgestellt werden, der die axiale Bewegung zwischen Hülse und Antriebsbit in Setzrichtung begrenzt und dadurch eine definierte Endlage bereitstellt.

Bevorzugt kann das Einsatzelement derart gestaltet sein, dass die Hülse aufgrund einer Federvorspannung in Setzrichtung gegen die Schulter im Antriebsbit gedrückt wird. So werden die Anlageflächen von Bund und Schulter aktiv aneinandergedrückt, so dass eine verbesserte Dichtwirkung erreicht werden kann. Zudem ist durch eine solche Anordnung gewährleistet, dass sich die Saugflache aufgrund der Federvorspannung der Hülse für den Ansaugvorgang zuverlässig in der definierten Endlage gegenüber dem Antriebsbit befindet, auch wenn, beispielsweise, die Setzrichtung entgegen der Schwerkraftrichtung liegt.

Dadurch kann das radiale Spiel der Hülse gegenüber dem Antriebsbit größer gewählt werden, wodurch wiederum die Zuverlässigkeit der axialen Beweglichkeit, verbessert wird, da eine ausreichende Abdichtung an der Anlagefläche zwischen Bund und Schulter in Axialrichtung zuverlässig erreicht wird.

Die Federvorspannung wird bevorzugt durch eine Federanordnung erzeugt, wobei die Federanordnung wenigstens eine Feder umfasst, wobei sich die Feder an einer Federauflage abstützt, die ortsfest in Bezug auf den Antriebsbit angeordnet ist.

Die Federanordnung kann insbesondere ein Tellerfederpaket oder eine Spiralfeder aufweisen.

Die Federauflage kann durch die Drehspindel bereitgestellt sein, wobei der Antriebsbit mit der Drehspindel verschraubt ist.

Die Federauflage kann auch über eine Einsetzbuchse bereitgestellt sein, die beispielsweise mit Hilfe einer Presspassung ortsfest in den Antriebsbit eingesetzt ist. Die Einsetzbuchse kann auch durch eine Übergangspassung, insbesondere eine H7/m6 Passung, mit dem Antriebsbit verbunden sein.

Bevorzugt sind der Antriebsbit und die Einsetzbuchse derart aufeinander abgestimmt, dass die mit dem Antriebsbit verbundene Reibspindel die Einsetzbuchse während des Fügeprozesses stützt, wobei sich die Einsetzbuchse in Setzrichtung gegen eine Schulter in dem Antriebsbit abstützt. Dies erlaubt eine Steckverbindung von Antriebsbit zu Reibspindel, so dass die gefederte Hülse in dem Antriebsbit als Baugruppe getauscht werden kann und dass die Prozesskräfte dennoch von der Spindel auf den Antriebsbit übertragen werden.

Die Vorspannung ist bevorzugt so gewählt, dass die Anpresskraft von Schulter an Bund ausreicht, um den Anpressdruck für den notwendigen Unterdruck zu erreichen, aber immer kleiner als die kleinste im Fügeprozess auftretende Axialkraft ist. Dies ist regelmäßig mit einer Kraft von weniger als 1 kN, insbesondere einer Kraft zwischen 5 N und 100 N, erreicht, damit sichergestellt ist, dass der Antriebsbit die axialen Prozesskräfte überträgt.

Das Einsatzelement mit seiner Hülse sind so auf den Antriebsbit abgestimmt, dass der Antriebsbit, der eine Andrückfläche zur Übertragung der Prozesskraft aufweist, während des Setzvorgangs mehr als 90% der Prozesskraft über die Andrückfläche des Antriebsbits überträgt.

Gemäß einer weiteren bevorzugten Ausgestaltung kann die Hülse einen entgegen der Setzrichtung liegenden Anschlag aufweisen, der mit der Drehspindel und/oder Einsetzbuchse in Anlage kommt.

Dadurch kann die Prozesskraft bzw. ein Prozesskraftanteil auf die Saugfläche der Hülse übertragen werden. Die Saugfläche dient somit zusätzlich als Druckfläche, zur Übertragung der für den Fügevorgang notwendigen Prozesskräfte oder Teile der Prozesskräfte.

Der Antriebsbit und die Länge der Hülse und die axiale Strecke, über die die Hülse axial verschiebbar ist, sind dabei so aufeinander abgestimmt, dass, wenn sich die Hülse in der entgegen der Setzrichtung liegenden Anschlagposition befindet, die Antriebsstrukturen eines Verbindungselements und die Antriebsstrukturen des Antriebsbits ineinandergreifen, die axialen Prozesskräfte aber über die Hülse übertragen werden.

Der entgegen der Setzrichtung liegende Anschlag kann als Hülsenabschnitt ausgeführt sein, der mit einem größeren Durchmesser als der stirnseitige Durchmesser an der Saugfläche ausgeführt ist, wobei der Übergang vom größeren zum kleineren Durchmesser gestuft ausgeführt ist, wodurch eine Schulter gebildet ist. Insbesondere ist innerhalb des Hülsenabschnitts mit dem größeren Durchmesser eine Feder eingesetzt, die sich in Setzrichtung an der Schulter abstützt und entgegen der Setzrichtung an dem Federauflageelement abstützt.

Gemäß einer weiteren Ausgestaltung kann der entgegen der Setzrichtung liegende Anschlag als Hülsenabschnitt mit demselben Durchmesser wie der stirnseitige Durchmesser ausgeführt sein. An der Hülse ist dann ein die Hülse umgebender Bund vorgesehen, an dem sich die Feder abstützt, wobei bevorzugt die Feder von der Hülse durchsetzt ist.

Gemäß einer besonders bevorzugten Ausgestaltung kann vorgesehen sein, dass die entgegen der Setzrichtung liegende Anlagefläche durchbrochen ausgeführt ist, da die Hülse an dem Federauflageelement zugewandten Hülsenende radiale Ausnehmungen aufweist. Dadurch wird gewährleistet, dass sich in das Einsatzelement eindringender Schmutz nicht an der Anschlagsfläche absetzt. Dadurch ist sichergestellt, dass die Abstimmung von Hülsenlänge und axial verfahrbarer Strecke nicht beeinträchtigt wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:
- Fig. 1: eine Schnittansicht einer ersten erfindungsgemäßen Ausgestaltung;
- Fig. 2a: eine Schnittansicht am Antriebsbit;
- Fig. 2b: eine Schnittansicht gemäß Fig. 2a, bei der das Verbindungselement gegen eine Bauteillage gedrückt wird;
- Fig. 3a: eine Schnittansicht des Antriebsbits durch die Antriebsstruktur in der Ansaugposition;
- Fig. 3b: einen Ausschnitt gemäß Fig. 3a in einer Arbeitsstellung gemäß Fig. 2b;
- Fig. 4: eine weitere erfindungsgemäße Ausführung;
- Fig. 5: eine Schnittansicht einer weiteren erfindungsgemäßen Ausführungsform;
- Fig. 6: eine Schnittansicht einer weiteren Ausgestaltung, einer Hülse;
- Fig. 7: eine Schnittansicht einer weiteren Ausgestaltung, einer Hülse;
- Fig. 8: eine Schnittansicht einer weiteren erfindungsgemäße Ausgestaltung des Antriebsbits;
- Fig. 9a: eine Schnittansicht einer weiteren zur Verarbeitung eines Verbindungselements mit einem Innenantrieb;
- Fig. 9b: einen entsprechenden Überstand in Setzrichtung der Hülse gegenüber dem Antriebsbit, und
- Fig. 9c: eine Schnittansicht C-C der Fig. 9a.

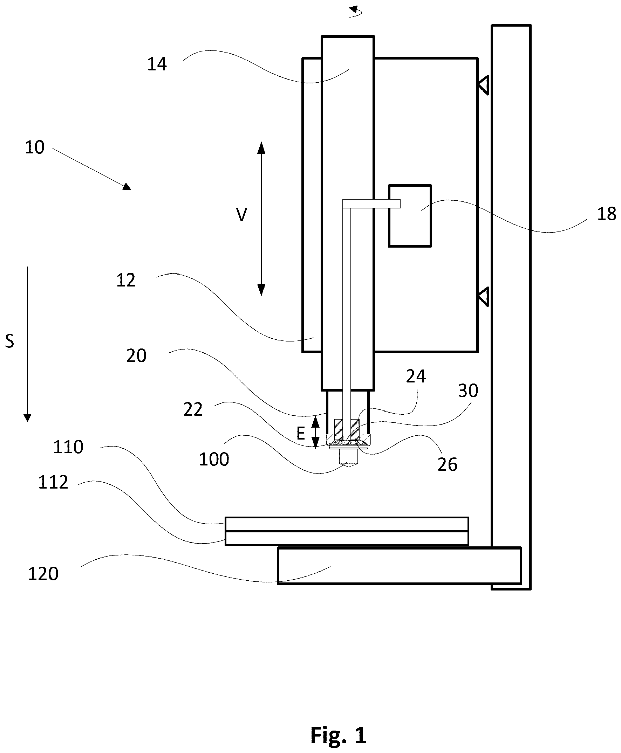

Fig. 1 zeigt eine schematische Ansicht einer erfindungsgemäßen Vorrichtung 10 zum Setzen eines Verbindungselements 100 mit einer kopfseitigen Antriebsstruktur 22, umfassend eine Vorschubeinrichtung 12 zur Aufbringung einer Axialkraft, eine Drehspindel 14 und einen mit dieser verbundenen Antriebsbit 20, der in einer Setzrichtung S stirnseitig umlaufend angeordnete Antriebsstrukturen 22 aufweist, um das Verbindungselement 100 im Wesentlichen formschlüssig in Drehung zu versetzen. Ferner umfasst die Vorrichtung 10 eine Saugeinheit 18, durch die Luft am stirnseitigen Ende des Antriebsbits 20 abgesaugt werden kann. Dadurch kann ein Verbindungselement 100 an das stirnseitige Ende des Antriebsbits 20 angesaugt werden. Nachdem das Verbindungselement 100 angesaugt wurde wird dies in Setzrichtung S nach unten gefahren und unter Anpressdruck, der durch die Vorschubeinrichtung 12 erzeugt wird und unter Rotation der Drehspindel 14 durch in den Bauteilverbund 110, 112 eingebracht, so dass insbesondere die obere Bauteillage durch das Verbindungselement 100 durchdrungen wird, und weiter das Verbindungselement 100 mit der unteren Bauteillage 112 mit Hilfe der eingebrachten Reibenergie verschweißt wird. Im hier dargestellten Fall wird die Vorschubeinrichtung 12 gegenüber einem Gegenhalter 120 verfahren, wobei die Bauteillagen 110 und 112 bei dem Verbindungsvorgang auf dem Gegenhalter 120 aufliegen. Regelmäßig kann zur Klemmung der Bauteillagen 110, 112 auch ein Niederhalter vorgesehen sein, der in diesem Fall nicht explizit dargestellt ist.

Erfindungsgemäß ist ein Einsatzelement 24 vorgesehen, das stirnseitig eine Saugfläche 26 aufweist, die einen Saugquerschnitt 30 umlaufend begrenzt, wobei das Einsatzelement 24 derart gestaltet ist, dass die Saugfläche 26 in Axialrichtung relativ beweglich zum Antriebsbit 20 ist.

Es wird ein Unterdruck von der in Setzrichtung S abgewandten Seite des Einsatzelements 24 zur Saugfläche 26 des Einsatzelements 24 übertragen, wobei die Saugfläche 26 vor dem Ansaugen eines Verbindungselements 100 eine erste Endlage einnimmt, die in Setzrichtung S vom stirnseitigen Randbereich der Durchführung beabstandet. Das Einsatzelement 24 wird während des Setzvorgangs in eine entgegen der Setzrichtung S der ersten Lage beabstandet liegenden zweite Lage um ein Maß E verschoben.

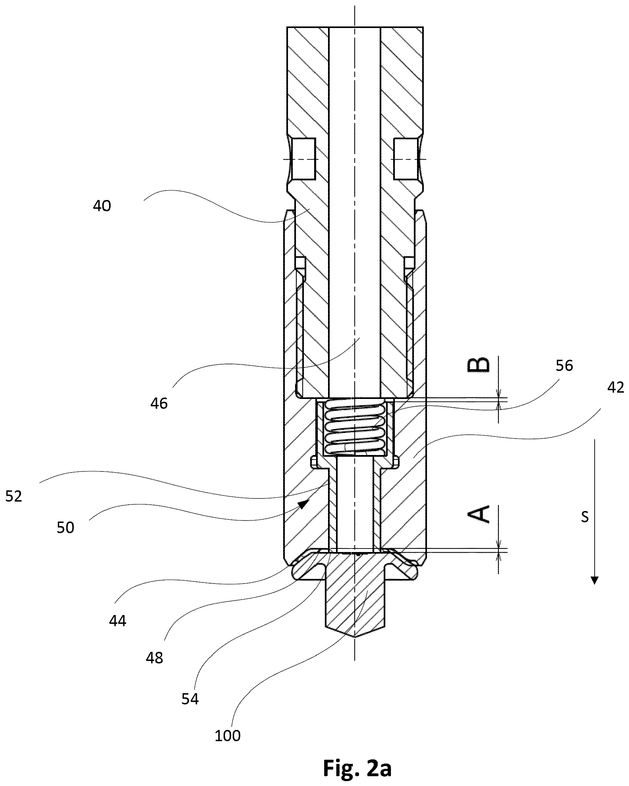

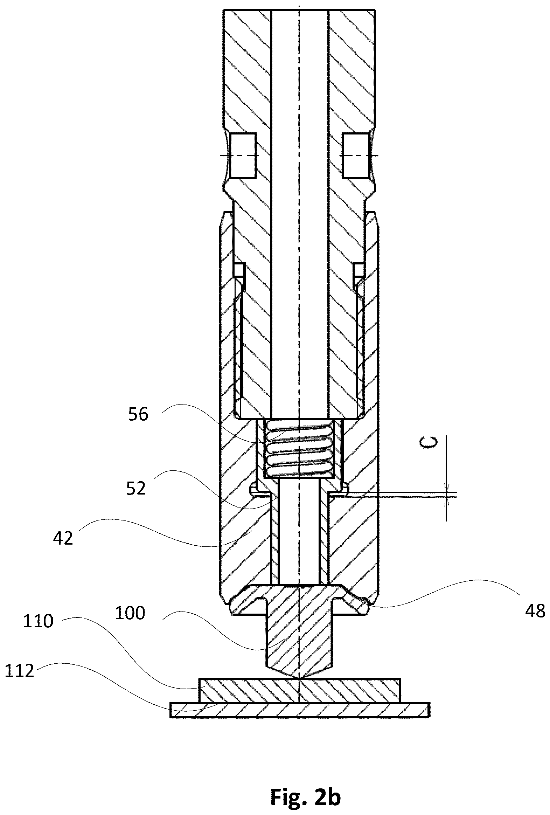

Verschiedene Varianten des Antriebsbits 20 in unterschiedlichen Ausgestaltungen des Einsatzelements 24 sind in den Figuren 2 bis 9c beschrieben.

Fig. 2a zeigt eine Schnittansicht am Antriebsbit 42 einer ersten erfindungsgemäßen Ausgestaltung einer Setzvorrichtung.

Die Setzvorrichtung umfasst die Drehspindel 40, die ein Verbindungselement 100 in Drehung versetzt und über die der Anpressdruck zur Herstellung der Verbindung vermittelt wird.

In der vorliegenden Ausführung ist ein Antriebsbit 42 auf die Drehspindel 40 aufgeschraubt. Der Antriebsbit 42 und die Drehspindel 40 sind mit einem zentralen Kanal 46 versehen, über den mittels einer Saugeinheit 18 beispielsweise einer Saugpumpe oder einer Venturi- Düse eine Saugwirkung am stirnseitigen Ende des Antriebsbits 42 erzeugt werden kann.

In dem Antriebsbit 42 ist ein Einsatzelement 50 eingebracht, das eine Hülse 52 umfasst, die an ihrer Stirnseite eine ringförmige Saugfläche 54 aufweist und das den Saugdruck an ein an der Saugfläche 54 anliegendes Verbindungselement 100 vermittelt. Das Einsatzelement 50 umfasst ferner eine Feder 56, insbesondere eine Spiralfeder, die zwischen der Drehspindel 40 und der Hülse 52 angeordnet ist, so dass die Hülse 52 in Setzrichtung S vorgespannt ist.

Die Hülse 52 und die Ausnehmung im Antriebsbit 42 sind dabei derart aufeinander abgestimmt, dass die Hülse 52 in Axialrichtung beweglich gelagert ist, aber ein erster Anschlag gebildet ist, der den maximalen Überstand A, den die Hülse 52 über die Andrückfläche 48 hinausragt, einstellt.

Indem der Überstand A in einer Ansaugstellung vorliegt, kann sich die Saugfläche 54 gut an die Kopffläche des Verbindungselements 100 anlegen, da eine Schiefstellung des Verbindungselements 100 aufgrund von Beschichtungsanlagerungen in den Antriebsstrukturen 22 des Verbindungselements 100 vermieden wird.

Ferner ist das entgegen der Setzrichtung S liegende Ende der Hülse 52 so auf den Antriebsbit 42 und die Drehspindel 40 eingestellt, dass die Hülse 52 an der Drehspindel 40 anschlägt, wenn sich die Saugfläche 54 auf Höhe der Andrückfläche 48 des Antriebsbits 42 befindet.

Der Anschlag ist derart gestaltet, dass der Abstand B in der Ansaugstellung wenigstens so groß wie der Überstand A ist. Dadurch kann gewährleistet werden, dass wesentliche Teile der Andrückkraft über den Antriebsbit 42 auf das Verbindungselement 100 übertragen werden.

Ist der Abstand B gleich dem Überstand A, kann eine Anpressdruckübertragung teilweise auch über die Hülse 52 von der Drehspindel 40 auf das Verbindungselement 100 übertragen werden.

Fig. 2b zeigt die erfindungsgemäße Anordnung gemäß Fig. 2a, wenn das Verbindungselement 100 gegen eine Bauteillage 110,112 gedrückt wird. Die Hülse 52 wird dabei gegen die Federkraft der Feder 56 verschoben bis die Saugfläche der Hülse 52 bündig mit der Andrückfläche 48 des Antriebsbits 42 ist. Soll die Andrückkraft nicht über die Hülse 52 übertragen werden sind die Hülse 52 und die Ausnehmung im Antriebsbit 42 so abgestimmt, dass die Hülse 52 im angedrückten Zustand nicht an die Drehspindel anschlägt.

Ansonsten kann bei einer Abstimmung, bei der die Hülse 52 an die Drehspindel 40 anschlägt, wenn die Saugfläche 54 der Hülse 52 bündig mit der Andrückfläche 48 des Antriebsbits 42 ist, die Andrückkraft auch teilweise über die Saugfläche übertragen werden, so dass insgesamt eine größere Kraftübertragungsfläche zur Verfügung steht. Dadurch können Abdrücke am Kopf des Verbindungselements 100 verringert werden, wodurch insbesondere die zur Korrosionsvermeidung vorgesehene Beschichtung des Elements geschont werden kann. Das Vorlaufmaß C entspricht in diesem Fall dem Überstand A.

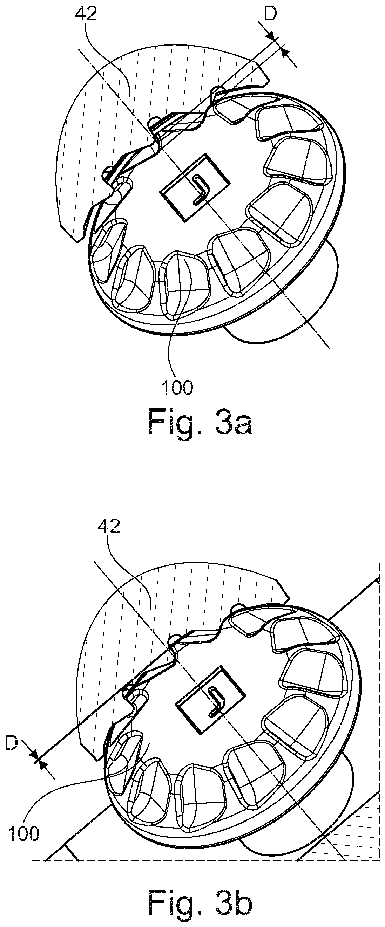

Fig. 3a zeigt eine Schnittansicht des Antriebsbits 42 durch die Antriebsstruktur in der Ansaugposition. An dieser Darstellung ist deutlich zu erkennen, dass ein deutlicher Abstand D zwischen den Antriebsstrukturen des Antriebsbits 42 und den Antriebsstrukturen des Verbindungselements 100 vorliegt, so dass sich gegebenenfalls, eine an den Antriebsstrukturen abgelagerte überschüssige Beschichtung nicht auf die Lage des Verbindungselements 100 in Bezug auf den Antriebsbit 42 auswirkt.

Fig. 3b zeigt den Ausschnitt gemäß Fig. 3a in einer Arbeitsstellung gemäß Fig. 2b. Es ist deutlich zu erkennen, dass in der Arbeitsstellung die Antriebsstrukturen des Antriebsbits 42 und die Antriebsstrukturen des Verbindungselements 100 ineinandergreifen. Der Abstand D ist deutlich geringer als in der Fig. 3a.

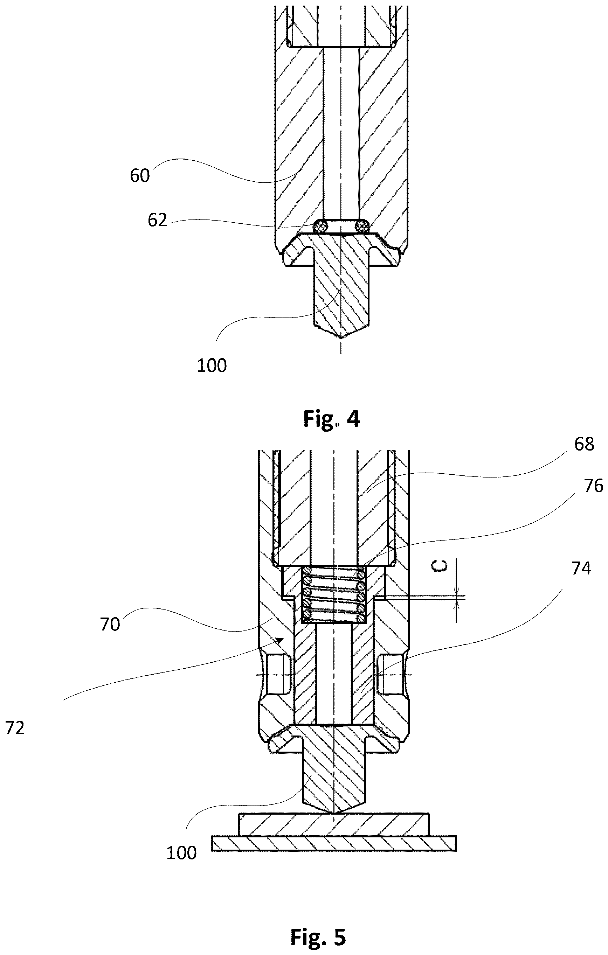

Fig. 4 zeigt eine weitere erfindungsgemäße Ausführung, bei der das Einsatzelement als ein in Axialrichtung elastisches, umfänglich geschlossenes Element, insbesondere als ein O-Ring 62, ausgebildet ist, wobei das elastische Element stirnseitig in den Antriebsbit 60 eingesetzt ist.

Die Elastizität und der Elementquerschnitt des elastischen Elements sind so aufeinander abgestimmt, dass bei ausgedehntem Querschnitt die Saugfläche in Setzrichtung von der Andrückfläche des Antriebsbits 60 einen definierten Abstand beabstandet ist, und dass es bei Andrücken des Verbindungselements 100 mit der Prozesskraft das Einsatzelement so komprimiert wird, dass die Andrückfläche des Antriebsbits 60 am Kopf des Verbindungselements 100 anliegt und sich das Einsatzelement auf dem gleichen Niveau wie die Andrückfläche befindet.

Der definierte Abstand ist dabei so gewählt, dass die Antriebsstrukturen des Antriebsbits 60 und des Verbindungselements 100 gerade nicht ineinandergreifen, wie dies auch in Fig. 3a, 3b, dargestellt ist.

Das elastische Element weist bevorzugt eine Shorehärte zwischen 50 und 120 Shore A auf.

Diese Ausgestaltung hat den Vorteil, dass das Einsatzelement keine beweglichen Teile umfassen muss, sondern die axiale Verschiebung der Saugfläche ausschließlich über die elastische Verformung des Einsatzelements erreicht wird.

Fig. 5 zeigt eine Schnittansicht einer weiteren erfindungsgemäßen Ausführungsform, bei der Antriebsbit 70 auf die Drehspindel 68 aufgeschraubt ist. In den Antriebsbit 70 ist axial beweglich ein Einsatzelement 72 eingesetzt, das eine Hülse 74 und eine Spiralfeder 76 umfasst. Die Ausgestaltung im Hinblick auf die Axialanschläge entspricht im Wesentlichen der Ausführung gemäß Fig. 2. Im Unterschied zu Fig.2 ist die Breite der als Ringfläche ausgebildeten Saugfläche 26 deutlich größer gewählt, so dass die Prozesskräfte im Wesentlichen über das Einsatzelement 72, also insbesondere über die Hülse 74 auf das Verbindungselement 100 übertragen werden. Die Länge der Hülse und der Abstand des Kopfanlagebereichs an dem Antriebsbit 70 sind dabei gleich lang. Die Spiralfeder 76 sorgt, wie schon im Hinblick auf die Fig. 2 beschrieben für eine axiale Positionierung der Hülse 74 in Ansaugstellung, wenn die Hülse 74 von außen nicht belastet ist.

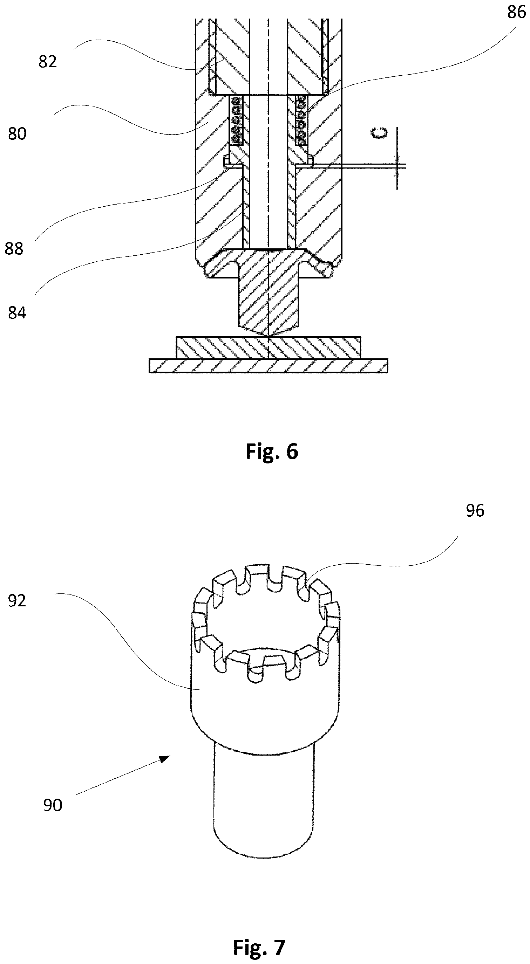

Fig. 6 zeigt eine weitere Ausgestaltung, einer Hülse 84, die ihren Anschlag an der Drehspindel 82 in Form einer durchgehenden Hülse 84 ausgebildet hat, die einen, sich radial nach außen erstreckenden Bund 88 aufweist. Eine Feder 86 liegt dabei über dem oberen Ende der Hülse 84 und stützt sich an der Drehspindel 82 und an dem Bund 88 ab. Der Bund 88 bildet auf seiner, der Feder abgewandten, Seite die Anschlagsfläche an dem Antriebsbit 80, der den Überstand C im Ansaugzustand festlegt.

Fig. 7 zeigt eine besonders bevorzugte Gestaltung einer Hülse 90, wie sie in einem der vorangehend beschriebenen Figuren unter geringen Abwandlungen einsetzbar ist, nämlich insoweit, dass das der Drehspindel zugewandtes Hülsenende 92, insbesondere umlaufende, Ausnehmungen 96 aufweist. Dies führt dazu, dass Schmutz, der aufgrund der Saugwirkung durch die Hülse angesaugt wird, sich nicht zwischen der Hülse 90 und der Reibspindel absetzt, sondern in die durch die Ausnehmungen 96 gebildeten Zwischenräume gelangen kann. So wird weitgehend verhindert, dass eine Anlagerung der Verschmutzung zwischen der Hülse 90 und der Drehspindel zu einer Verschiebung der Lage des Anschlags in Axialrichtung führt.

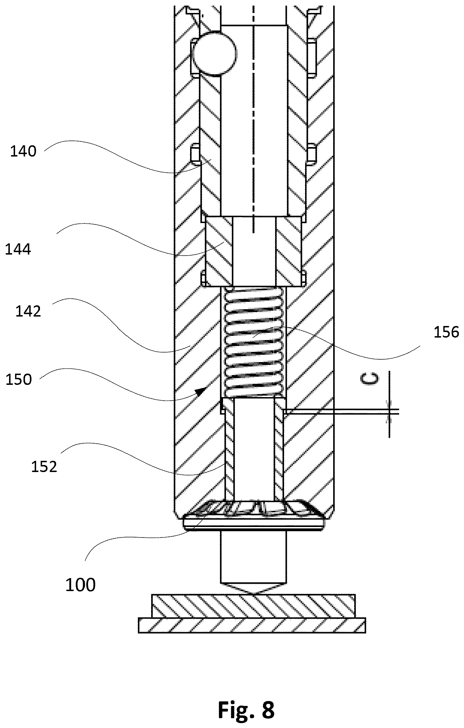

Fig. 8 zeigt eine weitere erfindungsgemäße Ausgestaltung der Erfindung, die sich in zwei Aspekten von den vorangehend beschriebenen Beispielen unterscheidet, nämlich, dass erstens die Hülse 152 einen Anschlag ausschließlich gegen die Feder 156 ausübt.
und zweitens, dass der Antriebsbit 142 eine Anschlagfläche 144 für das Einsatzelement 150 aufweist, so dass Antriebsbit 142 und Einsatzelement 150 gemeinsam als Baugruppe an die Drehspindel 140 montiert und demontiert werden können.

Bevorzugt ist die Anschlagfläche die stirnseitige Fläche eines Druckstücks 144, das insbesondere in einer Übergangspassung in den Antriebsbit 142 eingepresst ist. Der Antriebsbit 142 weist zudem Rastmittel auf, die mit Rastmitteln der Drehspindel 140 so verbindbar sind, dass eine Drehbewegung übertragen werden kann und das vordere Ende der Drehspindel 140 an dem Druckstück 144 anliegt. Bevorzugt liegt das Druckstück 144 in Setzrichtung an einer Schulter des Antriebsbits 142 an. So wird ermöglicht, dass die Prozesskraft formschlüssig auf den Antriebsbit 142 übertragen werden kann.

Auf diese Weise ist ein Schnellverschluss geschaffen, der bei Verschleiß oder Beschädigung einen Austausch der Einsatzelemente 150 einfach ermöglicht.

Die Feder 156 kann so dimensioniert sein, dass die Hülse 152, wenn die Saugfläche auf einer Höhe mit dem Antriebsbit 142 ist, gegen entweder die Feder 156 vollständig komprimiert und damit teilweise Prozesskräfte über die Hülse 152 auf das Verbindungselement 100 übertragen werden oder die Feder noch nicht vollständig komprimiert ist, so dass nur die Federkraft über die Hülse 152 auf das Verbindungselement 100 wirkt.

Die Ausgestaltung des Einsatzelements 150 kann beliebig mit den in übrigen beschriebenen Gestaltungen des Einsatzelements 150 kombiniert werden.

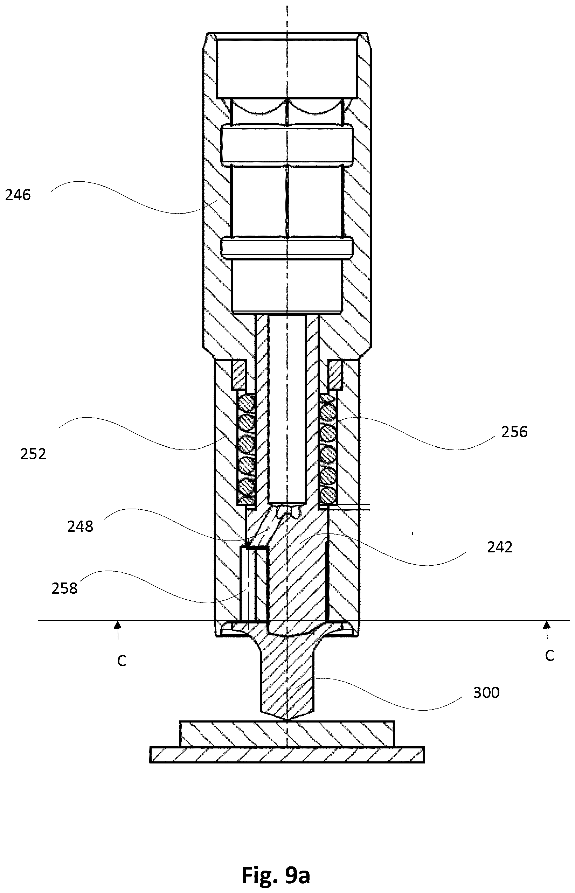

Fig. 9a zeigt eine weitere alternative Ausgestaltung, die ein Verbindungselement 300 mit einem Innenantrieb verarbeitet. Bei einem solchen, liegen der Andrückbereich und die Ansaugfläche außerhalb des Innenantriebs, wobei die Prozesskraft über die Hülse 252 vermittelt wird. Entsprechend schlägt die Hülse 252 an einem Drehspindelaufnahmeelement 246 an, wenn der Antriebsbit 242 vollständig in Eingriff mit dem Antrieb des Verbindungselements 300 ist. Wie auch zuvor beschrieben, wird der Überstand in der Ansaugposition durch eine Feder 256, die insbesondere eine Spiralfeder ist, hergestellt.

In den Antriebsbit 242 ist eine Mehrzahl von Ansaugkanälen 248 eingebracht, die jeweils in die Hülse 252 eingebrachte Ansaugkanäle 258 übergehen. So wird ein Ansaugen des Verbindungselements 300 ermöglicht.

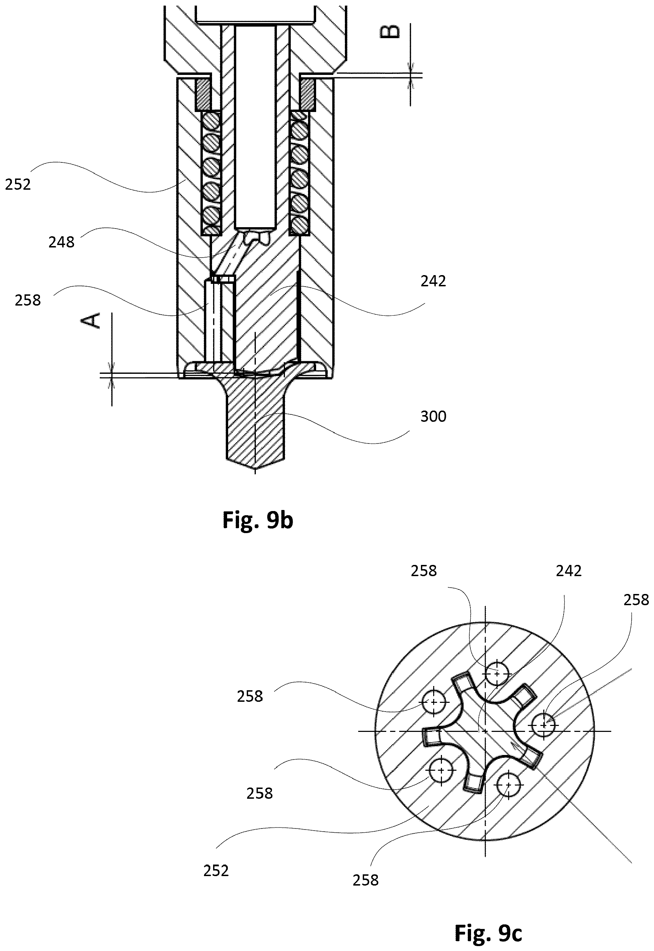

Die Schnittansicht ist in Fig. 9c näher erläutert.

Fig. 9b zeigt den entsprechenden Überstand A in Setzrichtung, der Hülse 252 gegenüber dem Antriebsbit 242. Auf diese Weise ist der Innenantrieb des Verbindungselements 300 noch nicht vollständig im Eingriff, wenn das Verbindungselement angesaugt ist.

Fig. 9c zeigt die Schnittansicht C-C der Fig. 9a. Die Ansaugkanäle 258 der Hülse 252 sind dabei entlang eines Kreisrings an der Andrückfläche der Hülse 252 verteilt. Der Antriebsbit 242 liegt zentral innerhalb der Hülse 252, die axial beweglich zum Antriebsbit 242 ist.

## Patentansprüche

1. Vorrichtung (10) zum Setzen eines Verbindungselements (100, 300) mit einer kopfseitigen Antriebsstruktur (22, 44), umfassend eine Vorschubeinrichtung (12) zur Aufbringung einer Axialkraft, eine Drehspindel (14, 40. 68,82, 140) und einem mit dieser verbundenen Antriebsbit (20, 42, 60, 70, 80, 142, 242), der in einer Setzrichtung (S) stirnseitig und umlaufend angeordnete Antriebsstrukturen (22, 44) aufweist, um das Verbindungselement (100, 300) formschlüssig in Drehung zu versetzen, wobei der Antriebsbit (20, 42, 60, 70, 80, 142, 242) eine axiale Durchführung aufweist, ferner umfasst die Vorrichtung eine Saugeinheit (18), mittels der Luft am stirnseitigen Ende des Antriebsbits (20, 42, 60, 70, 80, 142, 242) abgesaugt werden kann, **dadurch gekennzeichnet, dass** ein Einsatzelement (24, 50, 72, 150) vorgesehen ist, das stirnseitig eine Saugfläche (26, 54) aufweist, die einen Saugquerschnitt (30) umlaufend begrenzt, wobei das Einsatzelement (24, 50, 72, 150) derart gestaltet ist, dass die Saugfläche (26, 54) in Axialrichtung relativ beweglich zum Antriebsbit (20, 42, 60, 70, 80, 142, 242) ist, und ein Unterdruck von der in Setzrichtung (S) abgewandten Seite des Einsatzelements (24, 50, 72, 150) zur Saugfläche (26, 54) des Einsatzelements (24, 50, 72, 150) übertragen werden kann, wobei die Saugfläche (26, 54) vor dem Ansaugen eines Verbindungselements (100, 300) eine erste Endlage einnimmt, die in Setzrichtung (S) vom stirnseitigen Randbereich der Durchführung beabstandet ist und während des Setzvorgangs eine zweite entgegen der Setzrichtung (S) verschobene Lage einnimmt.

2. Vorrichtung nach Anspruch 1, **dadurch gekennzeichnet, dass** das Einsatzelement (24, 50, 72, 150) eine Hülse (52, 74, 84, 90, 152, 252) mit einer ersten Anlagefläche aufweist, und der Antriebsbit (42, 70, 80, 142, 242) eine zweite Anlagefläche aufweist, wobei die zweite Anlagefläche derart zur ersten Anlagefläche korrespondierend ausgebildet ist, dass bei einer vordefinierten Endlage der Saugfläche gegenüber dem Antriebsbit (42, 70, 80, 142, 242), die Anlageflächen derart dichtend zusammenwirken, dass ein Unterdruck durch die Hülse (52, 74, 84, 90, 152, 252) übertragbar ist.

3. Vorrichtung nach Anspruch 2, **dadurch gekennzeichnet, dass** die Anlagefläche an der Hülse (52, 74, 84, 90, 152, 252) als Bund und die Anlagefläche am Antriebsbit (42, 70, 80, 142, 242) als Schulter ausgeführt sind, wobei sich Bund und Schulter quer zur Setzrichtung erstrecken.

4. Vorrichtung nach Anspruch 3, **dadurch gekennzeichnet, dass** die Hülse (52, 74, 84, 90, 152, 252) gegen eine Federvorspannung in Setzrichtung gegen die Schulter im Antriebsbit (42, 70, 80, 142, 242) gedrückt wird.

5. Vorrichtung nach einem der Ansprüche 1 bis 4, **dadurch gekennzeichnet, dass** die Endlage in einem Abstand von 0,1 mm bis 4mm zu dem stirnseitigen Ende des Antriebsbits beträgt.

6. Vorrichtung nach einem der vorangehenden Ansprüche 4 oder 5, **dadurch gekennzeichnet, dass** die Federvorspannung durch wenigstens eine Feder (56, 86, 156, 256), erzeugt wird, die sich gegen mittelbar an einem ortsfest gegenüber dem Antriebsbit liegendes Federauflageelement (42, 70, 80, 144, 246) oder unmittelbar am Antriebsbit abstützt.

7. Vorrichtung nach Anspruch 6, **dadurch gekennzeichnet, dass** die Feder ein elastisches Element ist, das insbesondere ein Gummi-Element ist, das insbesondere ein O-Ring ist.

8. Vorrichtung nach Anspruch 6, **dadurch gekennzeichnet, dass** das Federauflageelement durch eine in den Antriebsbit (42, 60, 70, 80) eingeschraubte Drehspindel (14, 40, 68, 82) gebildet ist.

9. Vorrichtung nach einem der vorangehenden Ansprüche, **dadurch gekennzeichnet, dass** das Federauflageelement durch eine in den Antriebsbit (142) ortsfest eingesetzte Einsetzbuchse (144) gebildet ist.

10. Vorrichtung nach Anspruch 9, **dadurch gekennzeichnet, dass** die Einsetzbuchse (144) als Anlage für die Drehspindel dient, wobei sich die Einsetzbuchse (144) in Setzrichtung gegen eine Schulter in dem Antriebsbit (142) abstützt.

11. Vorrichtung nach einem der vorangehenden Ansprüche 4 bis 10, **dadurch gekennzeichnet, dass** die Federvorspannung eine Kraft von 5 N bis 100 N auf die Hülse (52, 74, 84, 90, 152, 252) ausübt.

12. Vorrichtung nach einem der vorangehenden Ansprüche 2 bis 11, **dadurch gekennzeichnet, dass** die Hülse (52, 74, 84, 90, 152, 252) einen Innendurchmesser von 1,0mm bis 10mm bei einer Wandstärke von 0,5 bis 5mm aufweist.

13. Vorrichtung nach einem der vorangehenden Ansprüche 2 bis 12, **dadurch gekennzeichnet, dass** die Hülse (52, 74, 84, 90, 252) einen von der Setzrichtung abgewandten Anschlag aufweist, der mit der Drehspindel (14, 40,82 140) oder einer Einsetzbuchse (144) in Anlage kommt, wodurch die Prozesskraft oder ein Teil der Prozesskraft auf das stirnseitige Ende der Hülse übertragen wird.

14. Vorrichtung nach Anspruch 13, **dadurch gekennzeichnet, dass** der Anschlag als Hülsenabschnitt mit einem größeren Durchmesser als der stirnseitige Durchmesser ausgeführt ist und die Feder (56,76) innerhalb der Hülse (52, 74) liegt.

15. Vorrichtung nach Anspruch 13, **dadurch gekennzeichnet, dass** der Anschlag als Hülsenabschnitt mit demselben Durchmesser wie der stirnseitige Durchmesser ausgeführt ist und die Feder (86) an einem die Hülse (84) umgebenden Bund anliegt.

16. Vorrichtung nach Anspruch 14 oder 15, **dadurch gekennzeichnet, dass** die Anschlagfläche (92) unterberochen ist, also wenigstens einen Absatz (96) aufweist, um Schmutz aufzunehmen.

## Claims

1. Device (10) for setting a connecting element (100, 300) having a head-side drive structure (22, 44), comprising a feed device (12) for applying an axial force, a rotary spindle (14, 40, 68, 82, 140), and a drive bit (20, 42, 60, 70, 80, 142, 242) connected to it, which latter has drive structures (22, 44) circumferentially arranged on its end face in a setting direction (S) for positive rotation of the connecting element (100, 300), said drive bit (20, 42, 60, 70, 80, 142, 242) having an axial through-opening made therein, which device additionally comprises a suction unit (18) that can be used to extract air from the front end of the drive bit (20, 42, 60, 70, 80, 142, 242), **characterized in that** an insert element (24, 50, 72, 150) is provided that has a suction surface (26, 54) on its front side, which latter circumferentially delimits a suction cross-section (30), which insert element (24, 50, 72, 150) is designed in such a way that the suction surface (26, 54) is movable in the axial direction relative to the drive bit (20, 42, 60, 70, 80, 142, 242), and a negative pressure can be transmitted from the side of the insert element (24, 50, 72, 150) facing away in the setting direction (S) to the suction surface (26, 54) of the insert element (24, 50, 72, 150), wherein the suction surface (26, 54), prior to sucking in a connecting element (100, 300), adopts a first end position which is spaced from the front-side edge region of the through-opening in the setting direction (S), and during the setting process adopts a second position which is offset counter to the setting direction (S),.

2. Device according to claim 1, **characterized in that** the insert element (24, 50, 72, 150) comprises a sleeve (52, 74, 84, 90, 152, 252) having a first contact surface, and the drive bit (42, 70, 80, 142, 242) has a second contact surface, which second contact surface is designed to correspond to the first contact surface in such a way that, in a predefined end position of the suction surface with respect to the drive bit (42, 70, 80, 142, 242), the contact surfaces interact in a sealing manner so as to allow a negative pressure to be transmitted through the sleeve (52, 74, 84, 90, 152, 252).

3. Device according to claim 2, **characterized in that** the contact surface on the sleeve (52, 74, 84, 90, 152, 252) is designed as a collar, and the contact surface on the drive bit (42, 70, 80, 142, 242) is designed as a shoulder, with both the collar and the shoulder extending transversely to the setting direction.

4. Device according to claim 3, **characterized in that** the sleeve (52, 74, 84, 90, 152, 252) is pressed in the setting direction against the shoulder in the drive bit (42, 70, 80, 142, 242) against a spring preload.

5. Device according to any one of claims 1 to 4 above, **characterized in that** the end position is spaced at a distance of between 0.1 mm and 4 mm from the front end of the drive bit.

6. Device according to any one of claims 4 or 5 above, **characterized in that** the spring preload is generated by at least one spring (56, 86, 156, 256), which is indirectly supported on a spring support element (42, 70, 80, 144, 246) arranged stationary relative to the drive bit, or which is directly supported on the drive bit.

7. Device according to claim 6, **characterized in that** the spring is an elastic element, which is in particular a rubber element, which is in particular an O-ring.

8. Device according to claim 6, **characterized in that** the spring support element is formed by a rotary spindle (14, 40, 68, 82) which is screwed into the drive bit (42, 60, 70, 80).

9. Device according to any one of the preceding claims, **characterized in that** the spring support element is formed by an insert sleeve (144) fixedly installed in the drive bit (142)

10. Device according to claim 9, **characterized in that** the insert sleeve (144) serves as an abutment for the rotary spindle, with the insert sleeve (144) bearing against a shoulder in the drive bit (142) in the setting direction.

11. Device according to any one of claims 4 to 10 above, **characterized in that** the spring preload exerts a force of between 5 N and 100 N on the sleeve (52, 74, 84, 90, 152, 252).

12. Device according to any one of claims 2 to 11 above, **characterized in that** the sleeve (52, 74, 84, 90,152, 252) has an inner diameter of between 1.0 mm and 10 mm, with a wall thickness of between 0.5 mm and 5 mm.

13. Device according to any one of claims 2 to 12 above, **characterized in that** the sleeve (52, 74, 84, 90, 252) has a stop facing away from the setting direction which comes into contact with the rotary spindle (14, 40, 82 140) or an insert sleeve (144), thus causing the process force to be transmitted in full or in part to the front end of the sleeve.

14. Device according to claim 13, **characterized in that** the stop is designed as a sleeve section that is larger in diameter than the front-side diameter, and that the spring (56, 76) is located within the sleeve (52, 74).

15. Device according to claim 13, **characterized in that** the stop is designed as a sleeve section being the same in diameter as the end-side diameter, and that the spring (86) rests against a collar surrounding the sleeve (84).

16. Device according to any one of claims 14 or 15 above, **characterized in that** the stop surface (92) is of a discontinuous design, i.e. it has at least one shoulder (96) for picking up dirt.

## Revendications

1. Dispositif (10) pour la mise en place d'un élément de liaison (100, 300) avec une structure d'entraînement (22, 44) côté tête, comprenant un système d'avance (12) pour l'application d'une force axiale, une broche rotative (14, 40, 68, 82, 140) et un embout d'entraînement (20, 42, 60, 70, 80, 142, 242) relié à celle-ci, qui présente des structures d'entraînement (22, 44) disposées frontalement et de manière périphérique dans une direction de mise en place (S), afin de mettre en rotation l'élément de liaison (100, 300) par coopération de formes, dans lequel l'embout d'entraînement (20, 42, 60, 70, 80, 142, 242) présente un passage axial, le dispositif comprend en outre une unité d'aspiration (18), au moyen de laquelle l'air peut être aspiré à l'extrémité frontale de l'embout d'entraînement (20, 42, 60, 70, 80, 142, 242), **caractérisé en ce qu'**un élément d'insertion (24, 50, 72, 150) est prévu, qui présente frontalement une surface d'aspiration (26, 54), qui délimite une section transversale d'aspiration (30) de manière périphérique, dans lequel l'élément d'insertion (24, 50, 72, 150) est conçu de telle sorte que la surface d'aspiration (26, 54) est relativement mobile dans la direction axiale par rapport à l'embout d'entraînement (20, 42, 60, 70, 80, 142, 242), et une pression négative peut être transmise à partir de la face de l'élément d'insertion (24, 50, 72, 150) opposée dans la direction de mise en place (S) vers la surface d'aspiration (26, 54) de l'élément d'insertion (24, 50, 72, 150), dans lequel la surface d'aspiration (26, 54) avant l'aspiration d'un élément de liaison (100, 300) occupe une première position finale, qui dans la direction de mise en place (S) est espacée de la zone de bord frontale du passage et pendant le processus de mise en place occupe une deuxième position déplacée à l'encontre de la direction de mise en place (S).

2. Dispositif selon la revendication 1, **caractérisé en ce que** l'élément d'insertion (24, 50, 72, 150) présente un manchon (52, 74, 84, 90, 152, 252) avec une première surface d'appui, et l'embout d'entraînement (42, 70, 80, 142, 242) présente une deuxième surface d'appui, dans lequel la deuxième surface d'appui est réalisée de manière correspondante à la première surface d'appui, de telle sorte que dans une position finale prédéfinie de la surface d'aspiration en face de l'embout d'entraînement (42, 70, 80, 142, 242), les surfaces d'appui coopèrent de manière étanche de telle sorte qu'une pression négative peut être transmise par le manchon (52, 74, 84, 90, 152, 252).

3. Dispositif selon la revendication 2, **caractérisé en ce que** la surface d'appui sur le manchon (52, 74, 84, 90, 152, 252) est conçue en tant que collet et la surface d'appui sur l'embout d'entraînement (42, 70, 80, 142, 242) en tant qu'épaulement, dans lequel le collet et l'épaulement s'étendent transversalement par rapport à la direction de mise en place.

4. Dispositif selon la revendication 3, **caractérisé en ce que** le manchon (52, 74, 84, 90, 152, 252) est pressé à l'encontre d'une précontrainte de ressort dans la direction de mise en place contre l'épaulement dans l'embout d'entraînement (42, 70, 80, 142, 242).

5. Dispositif selon l'une quelconque des revendications 1 à 4, **caractérisé en ce que** la position finale est à une distance de 0,1 mm à 4 mm par rapport à l'extrémité frontale de l'embout d'entraînement.

6. Dispositif selon l'une quelconque des revendications précédentes 4 ou 5, **caractérisé en ce que** la précontrainte de ressort est produite par au moins un ressort (56, 86, 156, 256), qui s'appuie indirectement sur un élément de support de ressort (42, 70, 80, 144, 246) situé de manière fixe par rapport à l'embout d'entraînement ou directement sur l'embout d'entraînement.

7. Dispositif selon la revendication 6, **caractérisé en ce que** le ressort est un élément élastique, qui est en particulier un élément en caoutchouc, qui est en particulier un joint torique.

8. Dispositif selon la revendication 6, **caractérisé en ce que** l'élément de support de ressort est formé par une broche rotative (14, 40, 68, 82) vissée dans l'embout d'entraînement (42, 60, 70, 80).

9. Dispositif selon l'une quelconque des revendications précédentes, **caractérisé en ce que** l'élément de support de ressort est formé par une douille d'insertion (144) insérée de manière fixe dans l'embout d'entraînement (142).

10. Dispositif selon la revendication 9, **caractérisé en ce que** la douille d'insertion (144) sert d'appui à la broche rotative, dans lequel la douille d'insertion (144) s'appuie dans la direction de mise en place contre un épaulement dans l'embout d'entraînement (142).

11. Dispositif selon l'une quelconque des revendications précédentes 4 à 10, **caractérisé en ce que** la précontrainte de ressort exerce une force de 5 N à 100 N sur le manchon (52, 74, 84, 90, 152, 252).

12. Dispositif selon l'une quelconque des revendications précédentes 2 à 11, **caractérisé en ce que** le manchon (52, 74, 84, 90, 152, 252) présente un diamètre intérieur de 1,0 mm à 10 mm pour une épaisseur de paroi de 0,5 à 5 mm.

13. Dispositif selon l'une quelconque des revendications précédentes 2 à 12, **caractérisé en ce que** le manchon (52, 74, 84, 90, 252) présente une butée opposée à la direction de mise en place, qui vient en appui avec la broche rotative (14, 40, 82, 140) ou une douille d'insertion (144), moyennant quoi la force de traitement ou une partie de la force de traitement est transmise sur l'extrémité frontale du manchon.

14. Dispositif selon la revendication 13, **caractérisé en ce que** la butée en tant que section de manchon est conçue avec un diamètre plus grand que le diamètre frontal et le ressort (56, 76) se situe à l'intérieur du manchon (52, 74).

15. Dispositif selon la revendication 13, **caractérisé en ce que** la butée en tant que section de manchon est conçue avec le même diamètre que le diamètre frontal et le ressort (86) s'applique sur un collet entourant le manchon (84).

16. Dispositif selon la revendication 14 ou 15, **caractérisé en ce que** la surface de butée (92) est interrompue, par conséquent présente au moins une saillie (96) pour recevoir la poussière.
